# EUROPEAN PATENT SPECIFICATION

(11) **EP 2 528 226 B1**
(45) Date of publication and mention of the grant of the patent: **12.08.2020**
(21) Application number: 10843809.4
(22) Date of filing: 21.01.2010
(51) Int. Cl.: H02P 27/06, B66B 5/02

(54) **RESCUE OPERATION DEVICE OF ELEVATOR**
RETTUNGSOPERATIONSVORRICHTUNG FÜR EINEN AUFZUG
DISPOSITIF POUR OPÉRATION DE SAUVETAGE POUR ASCENSEUR

(43) Date of publication of application: 28.11.2012
(73) Proprietor: Mitsubishi Electric Corporation, Tokyo 100-8310 (JP)
(72) Inventor: YASUE, Masanori, Tokyo 100-8310 (JP)
(74) Representative: Hoffmann Eitle
(86) International application number: PCT/JP2010/000314
(87) International publication number: WO 2011/089643

(56) References cited:
- EP-A2- 0 733 578
- WO-A2-00/13289
- JP-A- 2006 197 750
- JP-A- 2009 143 711
- JP-B2- 2 990 058
- JP-Y1- 46 007 719

## Description

### TECHNICAL FIELD

The present invention relates to a rescue operation apparatus of an elevator.

### BACKGROUND ART

As a rescue operation apparatus of an elevator according to the background art, as described in Patent Document 1, a rescue operation apparatus using a dynamic brake has been known.

The rescue operation apparatus having a control device of an elevator, which is driven by an inverter that detects input current of a synchronous motor using a permanent magnet as a magnetic system and then converts the detected current into a component having the same phase as a magnetic flux of the permanent magnet and a component orthogonal to the component having the same phase to control, the apparatus has: a power fault detection means that detects fault in a power supply; a rescue floor detection means that detects a rescue floor of a car stopped due to the fault in the power supply; a short-circuit means that shorts an input terminal of the synchronous motor when the power the fault detection means detects the fault in the power supply; and a brake control means that when the input terminal of the synchronous motor is shorted and a start-up command is issued, opens a brake of a hoist and then drives the car, and operates the brake based on an output of the rescue floor detection means when the car reaches the rescue floor.

According to the above rescue operation apparatus, when the fault in the power is detected by the power fault detection means, the brake control means shorts the input terminal of the synchronous motor by the short-circuit means, the brake control means releases the brake of the hoist and then drives the car when the start-up command is detected, and the brake control means operates the brake by the rescue floor detection means, when the car reaches the rescue floor. When the power supply has the fault, it is possible to rescue a passenger by shorting the input of the synchronous motor by a contactor, releasing the electromagnetic brake and driving the elevator to the rescue floor at low speed.

However, when the car and a weight are balanced, the car does not automatically move even when the brake is released. Therefore, in order to make a mass difference between the car and the weight, an operator carries a weight object such as tool box on the car or attaches a weight to a governor rope and then lifts the car up and down.

In contrary, Patent Document 2 proposes a method of enabling a rescue operation even when the car and the weight are balanced.

An emergency operation device rotates a synchronous motor for elevator operation and thus moves a car at an emergency state such as power failure. The emergency operation device includes a direct current power source and a rotary switch that supplies a direct current voltage from the direct current power source to a winding of the synchronous motor and an actuator for releasing a brake. The rotary switch has six contact points or contact points of the same number as the multiple of 6, and an operating interval of the contact points of the rotary switch is an angle that is obtained by dividing a total rotating angle, i.e., 360 degrees by 6 or the multiple of 6. Thereby, the direct current voltage of the direct current power is sequentially supplied to each winding.

### [Related Technical Documents]

### [Patent Documents]

[Patent Document 1] JP-A-H9-9699
[Patent Document 2] JP-B-2990058

### SUMMARY OF THE INVENTION

### PROBLEMS TO BE SOLVED

However, according to the above rescue operation apparatus of an elevator, a rotor of the motor is rotated little by little by the rotary switch, in response to excitation. Thereby, it takes time to drive the motor and the excitation is made with the substantially same phase as a magnetic pole position of the motor. Therefore, high reactive current that does not generate a torque is supplied to the motor from a storage battery, so that the storage battery is rapidly consumed.

The present invention has been made to solve the above-described problem. The present invention provides a rescue operation apparatus of an elevator capable of moving a car by a simple configuration even when the car and a weight are balanced.

### MEANS FOR SOLVING THE PROBLEMS

The object of the invention is achieved by the subject-matter of the independent claim.

Advantageous embodiments are defined in the dependent claims. Further examples are provided for facilitating the understanding of the invention.

According to an example, it is provided a rescue operation apparatus of an elevator, which is used in a rescue operation of an elevator in which a permanent magnet synchronous motor is used for a hoist and a brake is released to move a car, the rescue operation apparatus comprising: a direct current power having one electrode and the other electrode; a brake switch that connects and opens the direct current power with a coil of the brake; an exciting means that generates a torque by connecting the direct current power to a three-phase winding of the motor and making the current flow into the motor, and a rescue switch that connects and opens the exciting means with the direct current power, wherein the exciting means has: a first excitation pattern in which one electrode of the direct current power is connected to one phase of the three-phase winding and the other electrode of the direct current power is connected to the other two phases of the three-phase winding; a second excitation pattern which generates a command to set a phase formed by the three-phase winding of the motor forward by an electrical angle of 90 degrees in a direction in which the car is to be moved; and an off pattern, in which windings of the two phases are set apart from the direct current power

According to an example of rescue operation apparatus, in a case where the car is not moved even when the brake is released by the brake switch in a state that the car and a weight are balanced, when the exciting means is connected to the direct current power by the rescue switch, the exciting means connects one electrode of the direct current power to one phase of the three-phase winding of the motor and connects the other electrode of the direct current power to the other two phase of the three-phase winding of the motor. Thereby, the pulse-like current flows into the motor for a short time, and the torque is generated, so that the car is moved upward or downward. The second excitation pattern generates a command to set a phase formed by the three-phase winding of the motor forward by an electrical angle of 90 degrees in a direction in which the car is to be moved. Thereby, the excitation can be made so that the torque of the motor becomes maximal, irrespective of an initial position of a rotor of the motor, and thus the car can be effectively driven. Further, since the windings of the two phases are set apart from the direct current power, based on the off pattern, it is possible to move the car to a near floor and to rescue a passenger in the car while suppressing a generation of a torque of counter-rotation from the motor.

According to another example of the rescue operation apparatus of an elevator preferably includes a rectification means that makes the current flow from the motor into the direct current power through the rescue switch when a voltage generated from respective windings of the motor exceeds a voltage of the direct current power.

Thereby, when the rotating speed of the motor is increased and thus the generation voltage of the motor exceeds the voltage of the direct current power, braking current flows into the motor through the rectification means. Accordingly, since it is possible to suppress the speed increase of the car and the rotating speed of the motor, the safeness at the rescue time is improved.

According to another example of the rescue operation apparatus of an elevator, preferably, the rescue switch is opened to set the direct current power apart from the exciting means and to short a terminal of the motor through the rectification means.

Thereby, the terminal of the motor is shorted through the rectification means by opening the rescue switch. Therefore, it is possible to rapidly decelerate the car by rapidly slowing down the motor.

According to another example of the rescue operation apparatus of an elevator, the exciting means preferably has a third excitation pattern that generates a command to set the phase formed by the three-phase winding of the motor forward by an electrical angle of 120 degrees in a direction in which the car is to be moved.

Thereby, the excitation so that the torque of the motor becomes further maximal is performed at a time point, at which the rotor of the motor is rotated a little, for example by an electrical angle of about 30 degrees. Therefore, it is possible to drive the car more efficiently.

### EFFECTS OF THE INVENTION

According to the present invention, it is possible to provide a rescue operation apparatus of an elevator capable of moving a car by a simple configuration even when the car and a weight are balanced.

### BRIEF DESCRIPTION OF THE DRAWINGS

FIG.1 is an overall view of a rescue operation apparatus of an elevator according to an embodiment of the present invention.
FIG. 2 is a view illustrating polarities of voltages applied to a three-phase winding of a motor shown in FIG. 1 (A) and exciting phases of motor windings (B).
FIG. 3 is a view illustrating an operation of the motor when a voltage is sequentially applied to the three-phase winding of the motor, as shown in FIG. 2 (A).
FIG. 4 is an overall view of a rescue operation apparatus of an elevator according to another embodiment of the present invention.
FIG. 5 is a view illustrating polarities of voltages applied to a three-phase winding of a motor shown in FIG. 4 (A) and exciting phases of motor windings (B).
FIG. 6 is a view illustrating an operation of the motor when a voltage is sequentially applied to the three-phase winding of the motor, as shown in FIG. 4 (A).

### DESCRIPTION OF REFERENCE NUMERALS

- 9:: power switch
- 11:: motor
- 17:: car
- 20:: storage battery
- 22:: brake switch
- 24:: brake
- 32:: rescue switch
- 34:: diode unit
- 50, 150:: exciting circuit

### MOST PREFERRED EMBODIMENTS OF THE INVENTION

### First Embodiment

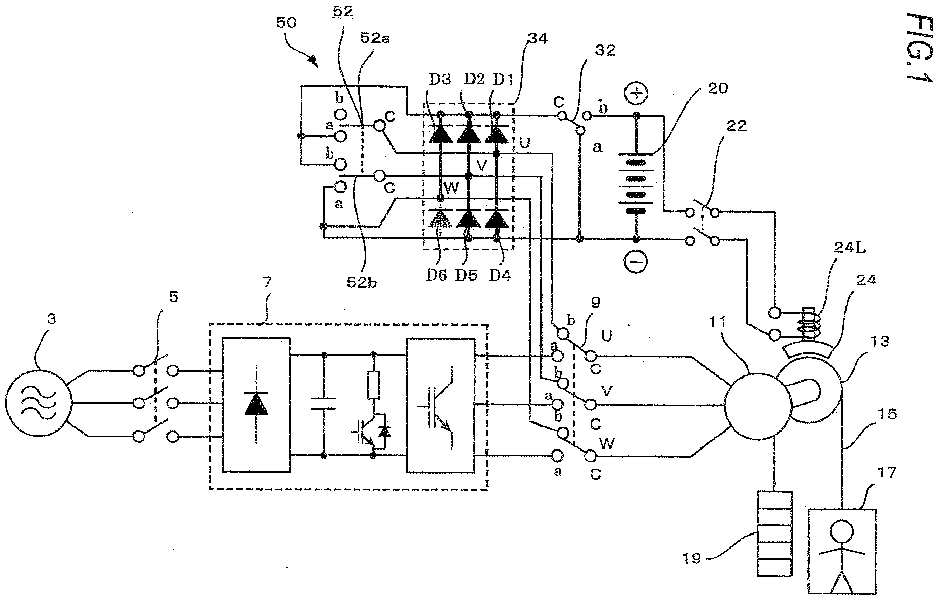

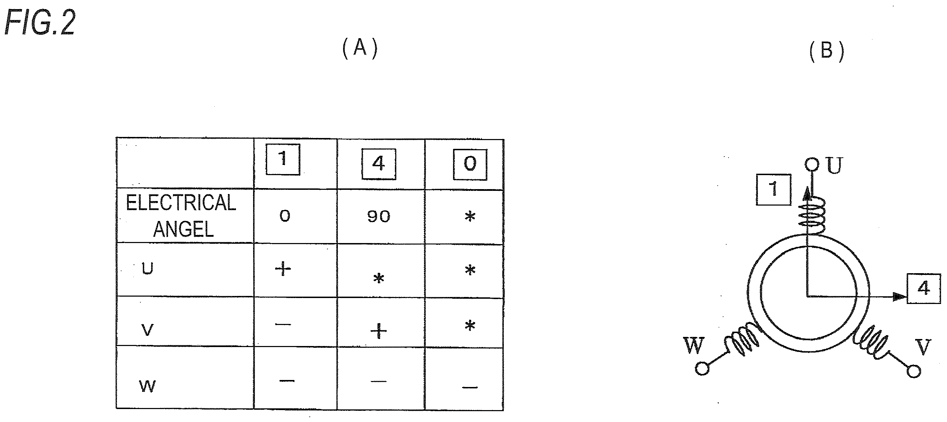

An embodiment of the present invention will be described with reference to FIGS. 1 and 2. FIG.1 is an overall view of a rescue operation apparatus of an elevator according to an embodiment of the present invention, and FIG. 2 is a view illustrating polarities of voltages that are applied to a three-phase winding of a motor shown in FIG. 1 (A) and exciting phases of motor windings (B).

In FIG. 1, an elevator has a permanent magnet synchronous motor 11 to which a three-phase alternating current power 3 is connected through a main switch 5, an inverter 7 and a power switch 9, a sheave 13 that is connected and fixed to a rotational shaft of the three-phase motor 11, a brake 24 that releases and constrains the sheave 13, a car 17 that is fixed to one end of a rope 15 strung on the sheave 13 and a weight 19 that is fixed to the other end of the rope 15. Current of a brake coil 24L from a storage battery 20 having one electrode (positive pole) and the other electrode (negative pole) is switched through a brake switch 22, so that the brake 24 is released and constrained to release and constrain the sheave 13.

The rescue operation apparatus includes: a rescue switch 32 that connects and opens the storage battery 20 with the motor 11; a diode unit 34 serving as a rectification means provided between respective windings of the motor 11 and the storage battery 20; and an exciting circuit 50 serving as an exciting means that connects the storage battery 20 serving as a direct current power to a three-phase winding of the motor 11 and then make the current flow thereto and generate a torque.

The diode unit 34 being a diode module having six elements for full-wave rectification has respective U, V and W phase inputs and cathode and anode side outputs, and is configured so that U, V and W phase terminals of the motor 11 are respectively connected to the respective U, V and W phase inputs as the power switch 9 is closed to terminals b.

Additionally, a cathode side of the diode unit 34 is connected to a terminal c of the rescue switch 32, and an anode side thereof is connected to an terminal a, a negative electrode of the storage battery 20 and the W phase input of the diode unit 34.
Incidentally, since a diode D6 does not function substantially, the diode unit 34 may be configured by five independent diodes.

The exciting circuit 50 has an exciting switch group 52. The exciting switch group 52 includes a first exciting switch 52a and a second exciting switch 52b that is operated in association with the first exciting switch 52a.
In the first exciting switch 52a, a terminal a is connected to the cathode side of the diode unit 34, a terminal b of the second exciting switch 52b and a terminal c of the rescue switch 32, and a terminal b is opened, and a terminal c is connected to a terminal b of the U phase of the power switch 9 and the U phase input of the diode unit 34.

In the second exciting switch 52a, an terminal a is connected to the W phase input of the diode unit 34, the negative electrode of the storage battery 20, the anode side of the diode unit 34 and a terminal a of the rescue switch 32, and a terminal b is connected to the terminal a of the first exciting switch 52a, and a terminal c is connected to the V phase input of the diode unit 32 and the terminal b of the power switch 9.

FIGS. 2(A) and 2(B) illustrates polarities of direct current voltages supplied to the windings U, V, W of the motor 11 by the exciting circuit 50 and excitation patterns excited in the windings of the motor 11, and the excitation phase in which an S pole is excited is shown as an electrical angle. For example, in an excitation pattern '1' serving as a first excitation pattern in which a positive pole is applied to the U phase of the motor 11 and a negative pole is applied to the V and W phases thereof by the exciting switch group 52, the S pole is excited with a phase (this is 0 degree) corresponding to the U phase. Also, in an excitation pattern '4' serving as a second excitation pattern in which the U phase of the motor 11 is opened, the V phase is positive pole, and the W phase is negative pole, the S pole is excited with a phase of an electrical angle of 90 degrees from the U phase.

Also, a state, in which a voltage is not applied to the motor 11 in which two or three phases of the motor 11 are opened, is an excitation pattern '0' serving as an off pattern. For example, in the off pattern, the U and V phases are opened and the voltage is not applied to the motor 11.

In a state that the rescue switch 32 is closing to the side b and the diode unit 34 is connected to the respective U, V and W terminals of the motor 11 through the storage battery 20, when a surge voltage generated by energy accumulated in winding impedances of the motor 11 when switching the circuit by the exciting switch group 52, the diode unit 34 supplies circulating current through the storage battery 20 and then clamps and suppresses the surge voltage. Further, when a voltage obtained by rectifying a power generation voltage of the motor 11 is increased more than the voltage of the storage battery 20, the diode unit supplies the current toward the storage battery 20 and then suppresses rotation of the motor 11.
Meanwhile, the diode unit 34 is configured to short the respective U, V and W terminals of the motor 11 by closing the rescue switch 32 to the side a.

In the below, an operation of the rescue operation apparatus of an elevator configured as described above is described with reference to FIGS. 1 to 3.

### <Usual Operation>

The power switch 9 is closed to the side a to disconnect the exciting circuit 50 from the motor 11 and to feed the power to the motor 11 through the inverter 7, so that the motor 11 is operated and thus the car 17 is moved.

### <Unbalance State of Car and Weight at Rescue Operation>

When performing a rescue operation in a state that the car 17 is emergency-stopped due to trouble or power failure, the power switch 9 is closed to the side b to connect the exciting circuit 50 and the motor 11. The rescue switch 32 is closed to the side a, so that the exciting switch group 52 is neutralized (opened) and thus the windings of the motor 11 are shorted through the diodes 34.

After that, when the brake switch 32 is closed, the power is fed from the storage battery 20 to the brake coil 24L, so that the brake 24 is released, and the car 17 is moved by the mass difference between the car 17 and the weight 19. At this time, since the windings of the motor 11 are shorted, the speed of the car 17 is suppressed from being rapidly increased, so that it is possible to safely rescue a passenger.

### < Balance State of Car and Weight at Rescue Operation>

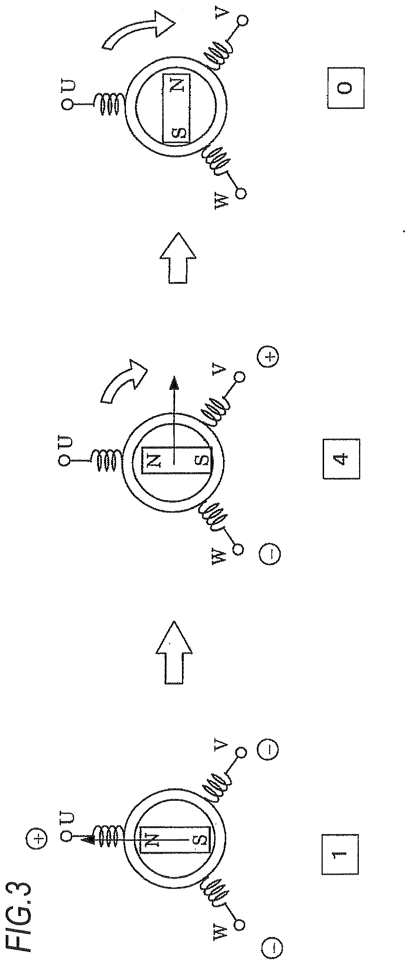

Even when the brake switch 22 is turned on and the brake 24 is released, the car 17 is not moved. At this time, in a state that the power switch 9 is closed to the side b, the exciting switch group 52 is closed to the side a, so that the positive electrode of the storage battery 20 is connected to the U phase of the winding of the motor 11 and the negative electrode is connected to the V and W phases. Thereby, as shown in FIG. 2, the first excitation pattern '1' is set, so that the S pole of the rotor of the motor 11 is excited with the phase of an electrical angle of 0 degree of the U phase side. Thus, the N pole of the rotor of the motor 11 is attracted to the S pole of the rotor of the U phase side ('1' in FIG. 3).

Then, when the exciting switch group 52 is closed to the side b, the positive electrode of the storage battery 20 is connected to the V phase terminal of the motor 11 and the negative electrode of the storage battery 20 is connected to the W phase terminal of the motor 11, so that the excitation pattern '4' is set, as shown in FIG. 2(A). Thereby, the S pole of the rotor is excited with the phase of the electrical angle of 90 degrees ('4' in FIG. 3). The motor 11 has the largest torque when a relation between a magnetic pole of a rotor and a magnetic pole phase of a stator has 90 degrees, so that the rotor is attracted and rotated by the torque.

Here, when the exciting switch group 52 is kept being connected to the side b, a torque is generated in a reverse direction to the rotation from a time point at which the magnetic pole of the rotor exceeds the electrical angle of 90 degrees, so that the motor 11 slows down the rotation. In order to avoid this, when the exciting switch group 52 is neutralized (opened) at a time point at which the rotor rotates a little, the excitation pattern '0' in which the torque is not generated from the motor 11 is formed, and the motor 11 continues to rotate by inertia ('0' in FIG. 3), so that the car 17 is moved.

As described above, when the car 17 can be moved upward or downward from the balance state by the first pulse-like torque from the motor 11, the difference between the car 17 side and the weight 19 side is enlarged in the rope mass. Accordingly, when the car 17 is once moved, it is easy for the car to move gradually.

In the meantime, when it is to move the car 17 in the opposite direction, the excitation switch group 52 is switched to the side b, so that the excitation pattern '4' is first set. Then, the exciting switch group 52 is switched to the side a to transition to the excitation pattern '1' and then to transition to the excitation pattern '0', so that it is possible to rotate the motor 11 in the reverse direction to the above.

Also, when the permanent magnet type synchronous motor 11 is rotated, the motor 11 serves as a power generator and then applies a voltage to a terminal. In the excitation pattern '0', the terminals of the motor 11 are clamped by the diode unit 34. Accordingly, when the rotating speed is increased, a power generation voltage is generated and a value obtained by rectifying the voltage in the diode unit 34 exceeds a direct current voltage value of the storage battery 20, power generation current is enabled to flow from the motor 11 toward the storage battery 11. Hence, the rotation of the motor 11 is suppressed. Also, when the rotating speed of the motor 11 is increased, for example, the rescue switch 32 is closed to the side a, so that the windings of the motor 11 are shorted to rapidly decrease the speed thereof.

According to the rescue operation apparatus of an elevator of the above embodiment, which is used in a rescue operation of an elevator in which the permanent magnet synchronous motor 11 is used for the hoist and the brake 24 is opened to move the car, is provided with the storage battery 20 having one electrode and the other electrode, the brake switch 22 that connects and opens the storage battery 20 with the brake coil 24L, the exciting circuit 50 that generates a torque by connecting the storage battery 20 to the three-phase winding of the motor 11 and making the current flow into the motor and the rescue switch 32 that connects and opens the exciting circuit 50 with the storage battery 20. The exciting circuit 50 has the first excitation pattern in which one electrode (positive pole) of the storage battery 20 is connected to one phase of the three-phase winding and the other electrode (negative pole) of the storage battery 20 is connected to the other two phases of the three-phase winding, the second excitation pattern which generates a command to set a phase formed by the three-phase winding of the motor 11 forward by the electrical angle of 90 degrees in a direction in which the car 17 is to be moved, and the off pattern in which windings of the two phases of the motor 11 are set apart from the storage battery 20.

According to the above rescue apparatus of an elevator, the current is generated to flow into the brake coil 24L from the storage battery 20 by the brake switch 22, so that the rescue switch 32 is connected to the storage battery 20. The exciting circuit 50 uses the power of the storage battery 20 to connect one electrode (positive pole) of the storage battery 20 to the motor 11 and the other electrode (negative pole) of the storage battery 20 to the other two phases of the three-phase winding, so that the current is flowed into the motor 11 and the torque is generated. Thereby, the car 17 is moved little by little in the intended direction. Based on the second excitation pattern which generates the command to set a phase formed by the three-phase winding of the motor 11 forward by the electrical angle of 90 degrees in a direction in which the car 17 is to be moved, it is possible to excite the motor 11 so that the torque thereof becomes maximal, irrespective of the initial position of the rotor of the motor 11, so that it is possible to effectively drive the car 17. Also, since the windings of the two phases of the motor 11 are set apart from the storage battery 20 by the off pattern, while suppressing generation of a torque of counter-rotation from the motor, it is possible to move the car to a nearest floor for example, and to rescue a passenger in the car.

Like the rescue apparatus of an elevator of the above embodiment, it is preferable to provide the diode unit 34 that make the current flow from the motor 11 into the storage battery 11, in case that the voltage that is generated from the respective windings of the three phases of the motor 11 through the rescue switch 32 exceeds the voltage of the storage battery 20.

Thereby, when the rotating speed of the motor 11 is increased and then the generated voltage of the motor 11 exceeds the voltage of the storage battery 20, the braking current flows to the motor 11 through the diode unit 34. Therefore, since it is possible to suppress the speed increase of the car 17 by suppressing the rotating speed of the motor 11, the safeness at the rescue time is improved.

Like the rescue apparatus of an elevator of the above embodiment, it is preferable that the rescue switch 32 is opened to set apart the storage battery 20 from the exciting circuit 50 and to short the terminals of the motor 11 through the diode unit 34. Thereby, the terminals of the motor 11 are shorted through the diode unit 32 by releasing the rescue switch 32. Therefore, it is possible to rapidly decelerate the car 11 by rapidly slowing down the motor 11.

In the meantime, the rescue apparatus can be also used for a rescue operation in a state that the car 17 and the weight 19 are unbalanced.

### Second Embodiment

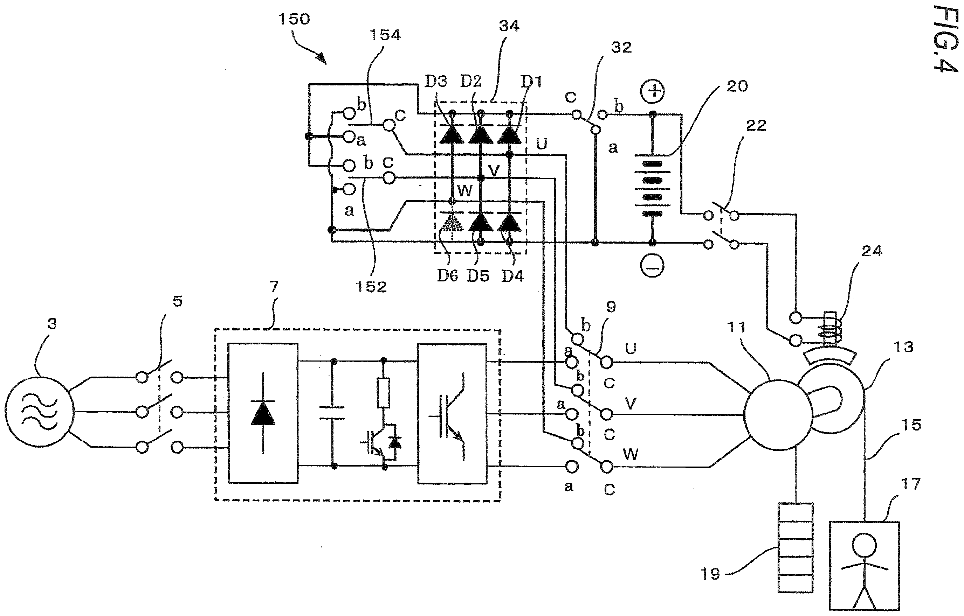

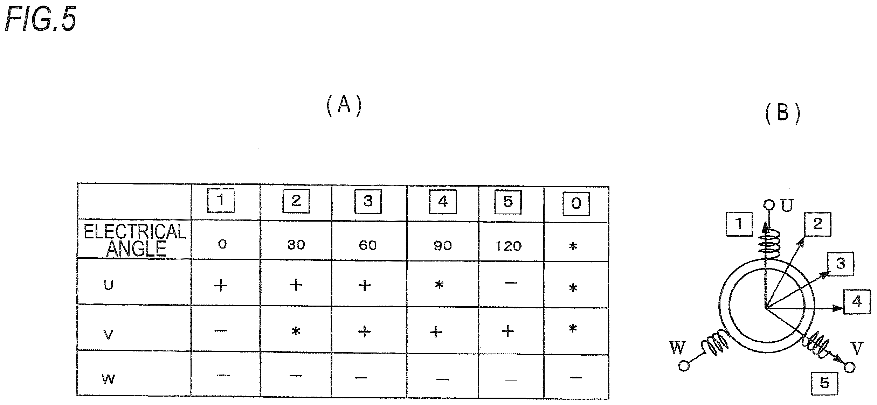

Another embodiment of the present invention is described with reference to FIGS. 4 and 5. FIG. 4 is an overall view of a rescue operation apparatus of an elevator according to another embodiment of the present invention and FIG. 5 is a view illustrating polarities of voltages that are applied to a three-phase winding of a motor shown in FIG. 4 (A) and exciting phases of motor windings (B). In FIG. 4, the same reference numerals as FIG. 1 indicate the same parts and the descriptions thereof are omitted.

In FIG. 4, the rescue operation apparatus of an elevator has a second exciting switch group 150, instead of the exciting switch group 52 shown in FIG. 1. The second exciting switch group 150 has a third exciting switch 152 and a fourth exciting switch 154 that is operated independently of the third exciting switch 152. In the third exciting switch 152, a terminal a is connected to a terminal b of the fourth exciting switch 154, a terminal b is connected to the terminal c of the rescue switch 32 and to the cathode of the diode unit 32, and a terminal c is connected to the V phase input of the diode unit 34.

In the fourth exciting switch 154, a terminal a is connected to the terminal c of the rescue switch 32, the cathode of the diode unit 34 and the terminal b of the third switching switch 152, and a terminal b is connected to the terminal a of the third exciting switch 152, the anode of the diode unit 34 and the W phase input of the diode unit 34, and a terminal c is connected to the U phase input of the diode unit 34.

In the rescue operation apparatus of an elevator, the terminal b of the fourth exciting switch 154 is connected to the negative electrode of the storage battery 20. Thereby, since the U phase terminal of the motor 11 is also switched to the negative electrode of the storage battery 20 and the third exciting switch 152 and the fourth exciting switch 154 can independently operate, it is possible to cope with all the excitation patterns '0' to '5', as shown in FIG. 5.

With the rescue operation apparatus of an elevator configured as described above, a rescue operation in a state that the car and the weight are balanced is described with reference to FIGS. 4 to 6.

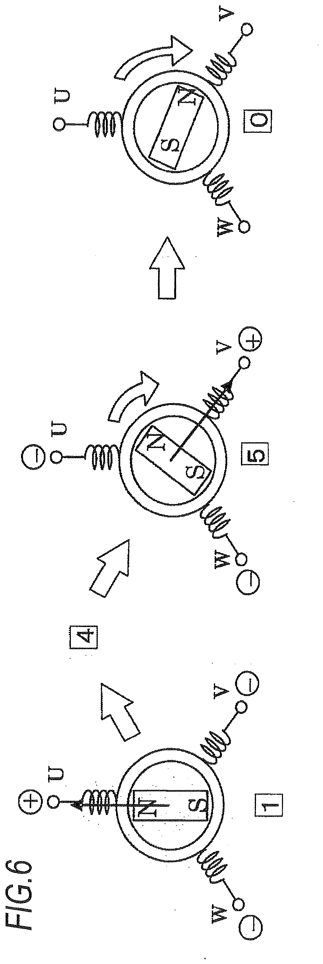

When the third and fourth exciting switches 152, 154 are connected to the side a in a state that the brake switch 22 is turned on and thus the rescue switch 32 and the power switch 9 are connected to the side b, the positive electrode of the storage battery 20 is connected to the U phase of the winding of the motor 11 and the negative electrode is connected to the V and W phases, like the first embodiment, so that a circuit corresponding to the excitation pattern '1' is set and thus the S pole is excited with the phase of the electrical angle of 0 degree of U phase side. Thus, the N pole of the rotor of the motor 11 is attracted to the S pole of the U phase side ('1' in FIG. 6).

After a while, when the third exciting switch 152 is connected to the side b to neutralize (open) the fourth exciting switch 154, the V phase input of the motor 11 is connected to the positive electrode of the storage battery 20 and the W phase input of the motor 11 is connected to the negative electrode of the storage battery 20, so that a circuit corresponding to the excitation pattern '4' is set. Thereby, the motor 11 excites the S pole with the phase of the electrical angle of 90 degrees ('4' in FIG. 6). The motor 11 has the largest torque w when a relation between a magnetic pole of a rotor and a magnetic pole phase of a stator has 90 degrees, so that the rotor is attracted and rotated by the large torque.

After that, when the fourth switch 154 is closing to the side b, the U phase input of the motor 11 is connected to the negative electrode of the storage battery 20, so that the excitation pattern '5' is set, so that the magnetic pole of the stator of the motor 11 becomes a phase of the electrical angle of 120 degrees ('5' in FIG. 6). Exactly, when the rotor of the motor 11 reaches the electrical angle of about 30 degrees, the magnetic pole of the rotor and the magnetic pole of the stator have a relation of 90 degrees, so that the torque is effectively applied and the rotor is accelerated. After that, when the third and fourth exciting switches 152, 154 are returned to the neutral (open) state, the excitation pattern '0' is set ('0' in FIG. 6) and the motor continues to rotate by inertia, so that the car 17 is moved.

Additionally, in case when moving the car 17 in the opposite direction, the third exciting switch 152 and the fourth exciting switch 154 may be switched so that the excitation pattern transitions from the excitation patterns '5', '2', '1', to '0'. Also, in the first and second embodiments, it has been described that the W phase of the motor 11 is a negative pole. However, it is needless to say that the same effects can be realized even when the W phase is changed into the other phase.

In the rescue apparatus of an elevator according to the above embodiment, the exciting circuit 150 preferably has a third excitation pattern in which a phase formed by the three-phase winding of the motor 11 is set forward by the electrical angle of 120 degrees in a direction in which the car 17 is to be moved. Thereby, the excitation with which the torque of the motor 11 becomes further maximal is made at a time point at which the rotor of the motor 11 is rotated a little, for example by an electrical angle of about 30 degrees. Hence, it is possible to drive the car 17 more efficiently.

### INDUSTRIAL APPLICABILITY

The present invention can be applied to a rescue operation apparatus of an elevator.

## Claims

1. A rescue operation apparatus for an elevator comprising a car (17) and a weight (19) in a balanced state, the rescue operation apparatus being configured to perform a rescue operation of the elevator, wherein the elevator comprises a permanent magnet synchronous motor (11) and a brake (24), the permanent magnet synchronous motor (11) being used for a hoist and the brake (24) being released to move a car (17), the rescue operation apparatus comprising:
a direct current power having a positive electrode and a negative electrode;
a brake switch (22) configured to connect and open the direct current power with a coil of the brake (24);
an exciting means configured to generate a torque by connecting the direct current power to a three-phase winding of the motor (11) and making the current flow into the motor (11), and
a rescue switch (32) configured to connect and open the exciting means with the direct current power,
the exciting means (50) configured to set:
a first excitation pattern by applying the positive electrode to the U phase of a three phase winding of the motor (11) and the negative electrode to the V and W phases thereof, so that the S pole of the rotor of the motor (11) is excited with a phase of an electric angle of 0 degree corresponding to the U phase; a second excitation pattern by opening the U phase of the three phase winding of the motor (11), the V phase being connected to the positive electrode and the W phase being connected to the negative electrode so that the S pole of the rotor of the motor (11) is excited with a phase of an electrical angle of 90 degrees from the U phase; and
an off pattern by opening the U and V phases, so that the voltage is not applied to the motor (11)
wherein when the car (17) is not moved even when the brake switch (22) is turned on and the brake (24) is released, the exciting means (50) is configured to apply the first excitation pattern, the second excitation pattern and the off pattern in that order.

2. The rescue operation apparatus of an elevator according to claim 1, further comprising:
a rectification means (34) configured to let the current flow from the motor (11) into the direct current power through the rescue switch (32) when a voltage generated from respective windings of the three phases exceeds a voltage of the direct current power.

3. The rescue operation apparatus of an elevator according to claim 2,
wherein the rescue operation apparatus is configured to set the direct current power apart from the exciting means and to short the thee phase winding of the motor (11) through the rectification means (34) by opening the rescue switch (32).

4. The rescue operation apparatus of an elevator according to claim 1 or 2,
wherein the exciting means is configured to set a third excitation pattern by setting the phase formed by the three-phase winding of the motor (11) forward by an electrical angle of 120 degrees in a direction in which the car (17) is to be moved.

## Patentansprüche

1. Rettungsaktionseinrichtung für einen Aufzug, umfassend eine Kabine (17) und ein Gewicht (19) in einem ausgeglichenen Zustand, wobei die Rettungsaktionseinrichtung konfiguriert ist, um eine Rettungsaktion des Aufzugs durchzuführen, wobei der Aufzug einen Permanentmagnet-Synchronmotor (11) und eine Bremse (24) umfasst, wobei der Permanentmagnet-Synchronmotor (11) für ein Hebezeug verwendet wird und die Bremse (24) gelöst wird, um eine Kabine (17) zu bewegen, wobei die Rettungsaktionseinrichtung umfasst:
eine Gleichstromversorgung aufweisend eine positive Elektrode und eine negative Elektrode;
einen Bremsschalter (22), der konfiguriert ist, um die Gleichstromversorgung mit einer Spule der Bremse (24) zu verbinden und zu öffnen;
ein Erregermittel, das konfiguriert ist, um ein Drehmoment zu erzeugen, indem es die Gleichstromversorgung mit einer Dreiphasenwicklung des Motors (11) verbindet und bewirkt, dass der Strom in den Motor (11) fließt, und
einen Rettungsschalter (32), der konfiguriert ist, um das Erregungsmittel mit der Gleichstromversorgung zu verbinden und zu öffnen,
wobei das Erregermittel (50) konfiguriert ist, um Folgendes einzustellen:
ein erstes Erregungsmuster durch Anlegen der positiven Elektrode an die U-Phase einer Dreiphasenwicklung des Motors (11) und der negativen Elektrode an die V- und W-Phasen davon, so dass der S-Pol des Rotors des Motors (11) mit einer Phase eines elektrischen Winkels von 0 Grad entsprechend der U-Phase erregt wird;
ein zweites Erregungsmuster durch Öffnen der U-Phase der Dreiphasenwicklung des Motors (11), wobei die V-Phase mit der positiven Elektrode und die W-Phase mit der negativen Elektrode verbunden ist, so dass der S-Pol des Rotors des Motors (11) mit einer Phase eines elektrischen Winkels von 90 Grad von der U-Phase erregt wird; und
ein Aus-Muster durch Öffnen der U- und V-Phasen, so dass die Spannung nicht an den Motor (11) angelegt wird,
wobei, wenn die Kabine (17) selbst dann nicht bewegt wird, wenn der Bremsschalter (22) eingeschaltet und die Bremse (24) gelöst wird, das Erregungsmittel (50) konfiguriert ist, um das erste Erregungsmuster, das zweite Erregungsmuster und das Aus-Muster in dieser Reihenfolge anzulegen.

2. Rettungsaktionseinrichtung eines Aufzugs nach Anspruch 1, weiter umfassend:
ein Gleichrichtermittel (34), das konfiguriert ist, um den Strom vom Motor (11) durch den Rettungsschalter (32) in die Gleichstromversorgung fließen zu lassen, wenn eine Spannung, die von jeweiligen Wicklungen der drei Phasen erzeugt wird, eine Spannung der Gleichstromversorgung übersteigt.

3. Rettungsaktionseinrichtung eines Aufzugs nach Anspruch 2,
wobei die Rettungsaktionseinrichtung konfiguriert ist, um die Gleichstromversorgung von dem Erregermittel zu trennen und die Dreiphasenwicklung des Motors (11) durch das Gleichrichtermittel (34) kurzzuschließen, indem der Rettungsschalter (32) geöffnet wird.

4. Rettungsaktionseinrichtung eines Aufzugs nach Anspruch 1 oder 2,
wobei das Erregermittel konfiguriert ist, um ein drittes Erregungsmuster einzustellen, indem es die Phase, die durch die Dreiphasenwicklung des Motors (11) gebildet wird, um einen elektrischen Winkel von 120 Grad in einer Richtung, in der die Kabine (17) bewegt werden soll, vorverlegt.

## Revendications

1. Appareil d'opération de secours pour un ascenseur comprenant une cabine (17) et un poids (19) dans un état d'équilibre, l'appareil d'opération de secours étant configuré pour effectuer une opération de secours de l'ascenseur, dans lequel l'ascenseur comprend un moteur synchrone à aimant permanent (11) et un frein (24), le moteur synchrone à aimant permanent (11) étant utilisé pour un palan et le frein (24) étant relâché pour déplacer une cabine (17), l'appareil d'opération de secours comprenant :
une alimentation en courant continu présentant une électrode positive et une électrode négative ;
un commutateur de frein (22) configuré pour raccorder et ouvrir l'alimentation en courant continu avec une bobine du frein (24) ;
un moyen d'excitation configuré pour générer un couple en raccordant l'alimentation en courant continu à un enroulement triphasé du moteur (11) et en faisant circuler le courant dans le moteur (11), et
un commutateur de secours (32) configuré pour raccorder et ouvrir le moyen d'excitation avec l'alimentation en courant continu,
le moyen d'excitation (50) configuré pour définir :
un premier motif d'excitation en appliquant l'électrode positive à la phase U d'un enroulement triphasé du moteur (11) et l'électrode négative aux phases V et W de celui-ci, de sorte que le pôle S du rotor du moteur (11) soit excité avec une phase d'un angle électrique de 0 degré correspondant à la phase U ;
un deuxième motif d'excitation en ouvrant la phase U de l'enroulement triphasé du moteur (11), la phase V étant raccordée à l'électrode positive et la phase W étant raccordée à l'électrode négative, de sorte que le pôle S du rotor du moteur (11) soit excité avec une phase d'un angle électrique de 90 degrés depuis la phase U ; et
un motif d'extinction en ouvrant les phases U et V, de sorte que la tension ne soit pas appliquée au moteur (11)
dans lequel, lorsque la cabine (17) n'est pas déplacée même lorsque le commutateur de frein (22) est allumé et que le frein (24) est relâché, le moyen d'excitation (50) est configuré pour appliquer le premier motif d'excitation, le deuxième motif d'excitation et le motif d'extinction dans cet ordre.

2. Appareil d'opération de secours d'un ascenseur selon la revendication 1, comprenant en outre :
un moyen de redressement (34) configuré pour laisser le courant circuler depuis le moteur (11) dans l'alimentation en courant continu à travers le commutateur de secours (32) lorsqu'une tension générée depuis des enroulements respectifs des trois phases dépasse une tension de l'alimentation en courant continu.

3. Appareil d'opération de secours d'un ascenseur selon la revendication 2,
dans lequel l'appareil d'opération de secours est configuré pour définir l'alimentation en courant continu à l'écart du moyen d'excitation et pour court-circuiter l'enroulement triphasé du moteur (11) à travers le moyen de redressement (34) en ouvrant le commutateur de secours (32).

4. Appareil d'opération de secours d'un ascenseur selon la revendication 1 ou 2,
dans lequel le moyen d'excitation est configuré pour définir un troisième motif d'excitation en définissant la phase formée par l'enroulement triphasé du moteur (11) en avant d'un angle électrique de 120 degrés dans une direction dans laquelle la cabine (17) doit être déplacée.
